# EUROPÄISCHE PATENTSCHRIFT

(11) **EP 0 374 346 B1**
(45) Veröffentlichungstag und Bekanntmachung des Hinweises auf die Patenterteilung: **19.05.1993**
(21) Anmeldenummer: 89104152.7
(22) Anmeldetag: 09.03.1989
(51) Int. Cl.: B29C 45/28

(54) **Nadelverschlussdüse für Spritzgiessformen**
Needle valve nozzle for injection moulds
Buse à obturateur à aiguille pour moules d'injection

(30) Priorität: 21.12.1988 DE 3843035
(43) Veröffentlichungstag der Anmeldung: 27.06.1990
(73) Patentinhaber: Männer, Otto, D-79353 Bahlingen (DE)
(72) Erfinder: Männer, Otto, D-79353 Bahlingen (DE)
(74) Vertreter: Schmitt, Hans, Dipl.-Ing.

(56) Entgegenhaltungen:
- EP-A- 0 282 999
- US-A- 4 412 807

## Beschreibung

Die Erfindung betrifft eine Nadelverschlußdüse für Spritzgießformen gemäß Oberbegriff des Patentanspruches 1.

Eine derartige Nadelverschlußdüse ist aus der US-A-44 12 807 bekannt. Dabei ist innerhalb des Gehäuses für die Nadel ein Führungskörper vorgesehen, der an einer Seite abgeplattet ist, so daß diese Abplattung mit dem Gehäuse zusammen die Innenhöhlung für die Zufuhr des Kunststoffes bildet. Die Verschlußnadel ist in einer sie über ihren ganzen Umfang umschließenden Bohrung des abgeplatteten Führungskörpers angeordnet.

Dadurch wird zwar erreicht, daß der Gießwerkstoff beim Einführen nicht in zwei Ströme aufgeteilt wird, jedoch ergibt sich durch die beschriebene Innenhöhlung gegenüber der eigentlichen Angußöffnung eine erhebliche Exzentrizität.

Es besteht deshalb die Aufgabe, eine Nadelverschlußdüse der gattungsgemäßen Art zu schaffen, bei welcher die Vorteile des nicht geteilten Gießstromes, also die Vermeidung von Bereichen unterschiedlicher Spannungen in einem gefertigten Werkstück bzw.

Formteil erhalten bleiben, der Gießwerkstoff aber dennoch so nah wie möglich an das Zentrum herangebracht wird und zentral in die Angußöffnung gelangen kann.

Diese Aufgabe wird mit den Mitteln und Merkmalen des kennzeichnenden Teiles des Patentanspruches 1 gelöst.

Auf diese Weise kann der Werkstoff die Verschlußnadel nicht umfließen, so daß er nicht aufgeteilt wird. Die Lippen können dabei durch das zugeführte Gießmaterial gegen die Verschlußnadel gedrückt werden, wodurch ein Eindringen von Gießwerkstoff zwischen Verschlußnadel und Dichtlippe verhindert wird. Die dabei auftretende höhere Klemmkraft an der Verschlußnadel spielt insofern keine Rolle, als während des Zutrittes des Gießwerkstoffes die Verschlußnadel nicht bewegt werden muß. Die seitliche Öffnung der Nadelführung ist deshalb wichtig und vorteilhaft, weil dadurch der Gießwerkstoff bei geöffneter Nadel in das Zentrum des Gehäuses und somit zentral zu dem Anguß der Form gelangt.

Zweckmäßig ist es dabei, wenn die Nadelführung etwa 3/5, 2/3, 3/4 oder 5/6 des Nadelumfanges umgreift. Die Verschlußnadel wird dadurch gut geführt, jedoch ergibt sich ein entsprechend breiter Spalt innerhalb der Führung, der bei geöffneter Verschlußnadel freigegeben ist und durch welchen unterhalb der zurückgezogenen Verschlußnadel die Gießmasse in die Führung der Verschlußnadel eintreten kann, so daß sie zentral in die Angußöffnung eingespritzt wird.

Zur Verminderung der Reibung zwischen der Verschlußnadel und ihrer Führung kann es zweckmäßig sein, wenn die Führung im Inneren gegen die Nadel hin offene Bereiche aufweist. Diese sich dadurch im Inneren der Nadelführung ergebenden, gegenüber der Nadel offenen Bereiche sind durch die übrigen, mit engen Toleranzen an der Verschlußnadel anliegenden Bereiche der Führung bzw. die vorerwähnten Lippen nahe der seitlichen Öffnung der Nadelführung gegen ein Eindringen von Gießwerkstoff geschützt.

Ein erheblicher zusätzlicher Vorteil der erfindungsgemäßen Nadelverschlußdüse besteht darin, daß Rückstromaussparungen nicht erforderlich sind, da der beim Verschließen der Verschlußnadel verdrängte Gießwerkstoff in die frei zugängliche exzentrische Innenhöhlung des Gehäuses ausweichen kann. Ein weiterer Vorteil besteht darin, daß die Verschlußnadel aufgrund der über ihre gesamte Länge reichenden Führung gegen Auslenkungen gesichert ist, ohne daß der zugeführte Werkstoffstrom aufgeteilt wird.

Nachstehend ist ein Ausführungsbeispiel der Erfindung mit den erfindungswesentlichen Merkmalen anhand der Zeichnung noch näher beschrieben. Es zeigt in zum Teil schematisierter Darstellung:
- Fig. 1: eine Stirnansicht einer Nadelverschlußdüse mit Blick auf ihren Auslaß und
- Fig. 2: einen Längsschnitt einer Nadelverschlußdüse.

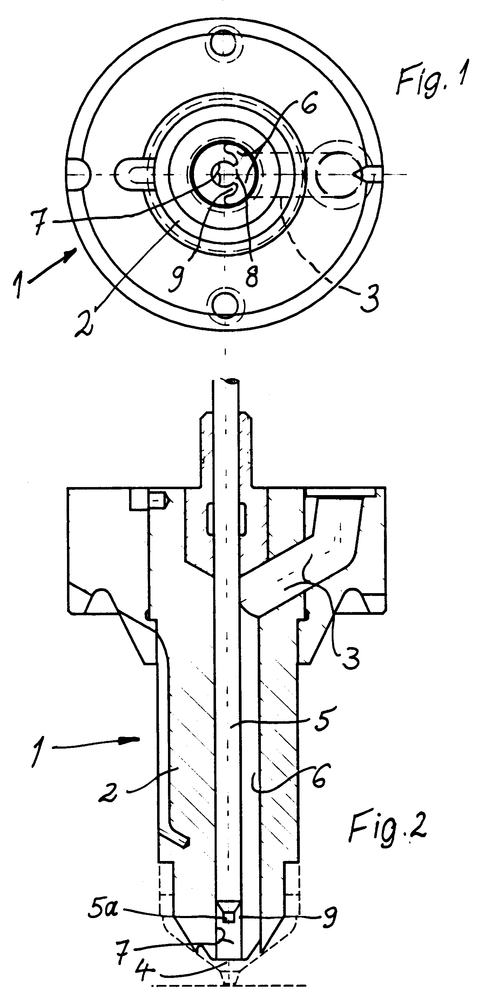

Eine im Ganzen mit 1 bezeichneten Nadelverschlußdüse für Spritzgießformen hat ein Gehäuse 2, eine Werkstoffzufuhr 3 zu diesem Gehäuse 2, einen auf die nicht näher dargestellte Spritzgießform aufsetzbaren Auslaß 4 und eine axial verstellbare Verschlußnadel 5, die in Fig. 2 in Offenstellung zurückgezogen ist und in Schließstellung den Auslaß 4 verschließt.

Vor allem bei gemeinsamer Betrachtung beider Figuren erkennt man, daß die Innenhöhlung 6 des Gehäuses 2 dieser Nadelverschlußdüse 1 exzentrisch auf der Seite angeordnet ist, auf der der Zuführkanal 3 für den Werkstoff in das Gehäuse 2 und in die Innenhöhlung 6 mündet. Die Führung 7 der konzentrisch im Gehäuse 2 angeordneten Nadel 5 reicht dabei auf ihrer dieser Zuführung 3 abgewandten Seite über die gesamte Nadellänge, was man besonders gut auch in Fig. 2 erkennt. Die Nadelführung 7 umgreift dabei mehr als die Hälfte des Umfanges der Nadel 5, im Ausführungsbeispiel etwa 3/4 bis 5/6 des Umfanges. Es bleibt also an der Führung 7 ein zu der Innenhöhlung 6 des Gehäuses hin offener Spalt 8 frei. Durch diesen kann bei zurückgezogener Verschlußnadel 5 unterhalb von deren Verschlußende 5a der Gießwerkstoff in die Führungsöffnung 7 der Nadel 5 eintreten, so daß er zentral in eine Angußöffnung eingespritzt wird.

In Fig. 1 erkennt man, daß die Führung 7 teilweise durch um die Nadel 5 greifende Lippen 9 gebildet ist, neben denen ebenfalls noch Raum für die zugeführte Gießmasse verbleibt, welcher Raum zu der Innenhöhlung 6 gehört. Die Lippen haben dabei den Vorteil, daß das an ihrer Außenseite befindliche und zugeführte Gießmaterial sie besonders fest gegen die Verschlußnadel 5 drücken und so ein Eindringen von Gießwerkstoff zwischen die Führung 7 und die Verschlußnadel 5 verhindern kann.

In Fig. 2 erkennt man, daß Rückstromaussparungen bei dieser Verschlußdüse 1 nicht erforderlich sind, weil das beim Verschließen der Nadel 5 verdrängte Gießmaterial in die frei zugängliche exzentrische Innenhöhlung 6 des Gehäuses 2 ausweichen kann. Die Nadel 5 ist aufgrund der über die ganze Länge reichenden Führung 7 gegen Auslenkungen gesichert.

Vor allem wird jedoch der durch den Zuführkanal 3 zugeführte Werkstoffstrom nicht mehr durch die Nadel 5 aufgeteilt, sondern kann zusammenhängend durch die Innenhöhlung 6, den Spalt 8 und die zentrale Führungsöffnung 7 zu der Angußöffnung gelangen.

## Patentansprüche

1. Nadelversehlußdüse (1) für Spritzgießformen für thermisch oder scherempfindliche Gießwerkstoffe, mit einem Gehäuse (2) und einer Werkstoffzufuhr (3) zu dem Gehäuse (2), einem auf die Spritzgießform aufsetzbaren Auslaß (4) dieses Gehäuses (2) und einer axial verstellbaren Verschlußnadel (5) für diesen Auslaß (6), wobei die Innenhöhlung (6) des Gehäuses (2) exzentrisch auf der Seite angeordnet ist, auf der der Zuführkanal (3) für der Werkstoff in dieses Gehäuse (2) und in die Innenhöhlung (6) mündet, und wobei die Führung (7) der konzentrisch im Gehäuse (2) angeordneten Vershlußnadel (5) auf ihrer dieser Zuführung (3) abgewandten Seite über die gesamte Nadellänge reicht, **dadurch gekennzeichnet,** daß die Nadelführung (7) die Nadel (5) derart über mehr als den halben Umfang umgreift, daß an der Führung (7) ein zu der Innenhöhlung (6) des Gehäuses (2) hin offener Spalt (8) freibleibt, und daß die Führung (7) für die Verschlußnadel (5) durch teilweise um die Nadel (5) reichende Lippen (9) oder dergleichen gebildet ist, neben denen Raum für die zugeführte Gießmasse verbleibt.

2. Nadelverschlußdüse nach Anspruch 1 , dadurch gekennzeichnet, daß die Nadelführung (7) etwa 3/5, 2/3, 3/4 oder 5/6 des Nadelumfanges umgreift.

3. Nadelverschlußdüse nach Anspruch 1 oder 2, dadurch gekennzeichnet, daß die Führung (7) im Inneren gegen die Nadel (5) hin offene Bereiche aufweist.

## Claims

1. A needle valve nozzle (1) for injection moulds for thermally or shear-sensitive moulding materials, including a housing (2) and a means (3) feeding material to the housing (2), an outlet (4) of said housing (2), which outlet is attachable to the injection mould, and an axially adjustable valve needle (5) for said outlet (4), the inner cavity (6) of the housing (2) being arranged eccentrically on that side at which the feed channel (3) for the material opens out into said housing (2) and inner cavity (6), and on the guide (7) side averted from said feeding means (3) the guide (7) of the valve needle (5) arranged concentrically in the housing (2) extends throughout the needle length, **characterized in that** the needle guide (7) encompasses the needle (5) over more than half the circumference in such a way that a gap (8) open towards the inner cavity (6) of the housing (2) remains clear at the guide (7), and that the guide (7) for the valve needle (5) is formed by lips (9) or the like which extend partly about the needle (5) and next to which space remains for the fed moulding material.

2. A needle valve nozzle as claimed in clad 1, characterized in that the needle guide (7) encompasses about 3/5, 2/3, 3/4 or 5/6 of the circumference of the needle.

3. A needle valve nozzle as claimed in claim 1 or claim 2, characterized in that the guide (7) has inside areas open towards the needle (5).

## Revendications

1. Buse à obturateur à aiguille (1) pour les moules de moulage par injection destinés à des matières à mouler qui sont sensibles à la chaleur ou au cisaillement, comprenant un carter (2) et une amenée (3) amenant de la matière au carter (2), une sortie (4) de ce carter (2), laquelle peut être posée sur le moule de moulage par injection, et une aiguille d'obturation déplaçable axialement (5) pour cette sortie (4), cependant que la cavité intérieure (6) du carter (2) est disposée d'une manière excentrée du côté où le canal (3) d'amenée de la matière débouche dans ce carter (2) et dans la cavité intérieure (6), et que le guidage (7) de l'aiguille d'obturation (5), laquelle est disposée d'une manière concentrique dans le carter (2), s'étend, sur son côté opposé à cette amenée (3), sur toute la longueur de l'aiguille, caractérisée par le fait que le guidage (7) de l'aiguille entoure l'aiguille (5) sur plus de la moitié de son pourtour, d'une manière telle qu'une fente (8) ouverte vers la cavité intérieure (6) du carter (2) reste libre sur le guidage (7), et par le fait que le guidage (7) destiné à l'aiguille d'obturation (5) est constitué par des lèvres (9) ou similaires, lesquelles s'étendent partiellement autour de l'aiguille (5), et à côté desquelles il reste de la place pour la masse à mouler qui est amenée.

2. Buse à obturateur à aiguille selon la revendication 1, caractérisée par le fait que le guidage (7) de l'aiguille entoure à peu près 3/5, 2/3, 3/4 ou 5/6 du pourtour de l'aiguille.

3. Buse à obturateur à aiguille selon la revendication 1 ou 2, caractérisée par le fait que le guidage (7) présente intérieurement des zones qui sont ouvertes vers l'aiguille (5).
